# EUROPEAN PATENT SPECIFICATION

(11) **EP 3 615 621 B1**
(45) Date of publication and mention of the grant of the patent: **23.08.2023**
(21) Application number: 18720191.8
(22) Date of filing: 18.04.2018
(51) Int. Cl.: C09D 179/08, C08G 73/14, F16C 33/20, C08J 7/12

(54) **BEARING MATERIAL, BEARING AND METHOD**
LAGERMATERIAL, LAGER UND ZUGEHÖRIGES VERFAHREN
MATÉRIAU DE PALIER, PALIER ET PROCÉDÉ

(30) Priority: 28.04.2017 GB 201706834
(43) Date of publication of application: 04.03.2020
(73) Proprietor: Mahle International GmbH, 70376 Stuttgart (DE); Mahle Engine Systems UK Limited, Rugby, Warwickshire CV23 0WE (GB)
(72) Inventor: LATHAM, Mark, Sheffield South Yorkshire S7 1HD (GB); MCEWAN, Kayleigh, Coalville Leicestershire LE67 1AJ (GB)
(74) Representative: BRP Renaud & Partner mbB Rechtsanwälte Patentanwälte Steuerberater
(86) International application number: PCT/EP2018/059941
(87) International publication number: WO 2018/197304

(56) References cited:
- EP-A1- 2 314 645
- CN-A- 105 950 264
- GB-A- 2 528 306

## Description

### Field of the Invention

The invention relates to a bearing material, a method for making the bearing material, and a bearing or bearing element comprising the bearing material. In particular, the invention relates to an improved plastics bearing material for use in forming a running surface or sliding surface of a plain bearing. Bearing materials and elements embodying the present invention are particularly suitable for use in automotive environments, including for supporting rotatable or slidable engine components and for use as, or as part of, other rotatable or slidable components such as thrust washers and flange bearing assemblies.

### Background of the Invention

Bearing elements are generally known which comprise a steel back, a substrate layer and a sliding layer (or overlay or running layer). These are commonly used in engines, such as internal combustion engines, for example as crankshaft and/or camshaft supporting bearings and big end bearings and small end bushings in connection rods. They may also be used as thrust washers (axial bearings).

Plain bearings for use as crankshaft journal bearings in internal combustion engines, for example, are usually semi-cylindrical in form and have a layered construction. This construction typically comprises; a backing made from a strong backing material such as steel, of a thickness in the region of about 1 mm or more; a lining of a first bearing material adhered to the backing and of thickness from about 0.1 to 0.5 mm; and a layer of a second bearing material adhered to the surface of the first bearing material and having a thickness of less than about 40 µm. The surface of the second bearing material forms the actual running or sliding surface with a co-operating shaft journal surface.

The backing provides strength and resistance to deformation of the bearing shell when it is installed in a main bearing housing or in a connecting-rod big end, for example.
The first bearing material layer may provide suitable bearing running properties if the layer of the second bearing material should be worn through for any reason, and prevent the journal surface from coming into contact with the strong backing material. It also bonds to the backing, and supports and bonds to the second bearing material. The first bearing material may commonly be either an aluminium-based alloy or a copper-based alloy. Copper-based alloys, such as bronzes, are typically used in more highly-loaded bearings to provide additional support for the second bearing material layer.

The second bearing material layer which co-operates with the shaft journal may also be termed an overlay, or overlay layer. Conventionally, this has been formed by a relatively soft metal layer, to provide conformability (the ability of the bearing to accommodate small misalignments between the bearing surface and the shaft journal) and embedability (the ability to prevent debris, or dirt particles, which may circulate in the lubricating oil, from scoring or damaging the journal surface by enabling such debris to embed in the bearing surface).

More recently, bearing overlay layers comprising a matrix of plastics polymer material have been used. Examples are described in WO 2004/113749 and WO 2010/066396. Such overlay materials are commonly based on a matrix of polyamide-imide (PAI) containing various filler materials, such as hard reinforcing particles, soft particles of solid lubricant materials, and other components such as metal particles. Hard reinforcing particles may include ceramic or metal oxide particles. Solid lubricants may include materials such as graphite or molybdenum disulphide. Metal particles may include aluminium particles, such as aluminium flakes.

PAI materials have proved to be able to provide robust and effective bearing materials, including in the aggressive conditions of modern internal-combustion engines where stop-start operation, to reduce fuel consumption, requires a typical engine to undergo a greatly increased number of stop-start operations. Each time an engine restarts, full hydrodynamic lubrication may not be in place and so bearings such as crankshaft bearings need to be able to survive an increased number of non-hydrodynamically-lubricated start-up operations. PAI-coated bearings, with suitable filler materials, have proved able to provide good performance, including conformability and embedability, but nevertheless the applicant for the present invention has found that it is advantageously possible to improve the performance of PAI bearing materials, and of bearings comprising these materials.

From GB 2 528 306 A a bearing is known having a plastic polymer-based composite layer on a substrate, wherein the composite layer comprising: a matrix of plastic polymer-based material having distributed throughout the matrix functionalized graphene nano platelets. The matrix material may be a polyamide-imide, which may be modified by a silane material, i.e. gamma-aminopropyltriethoxysilane or bis-(gamma-trimethoxysilylpropyl)-amine.

### Summary of the Invention

The present invention provides a bearing material, a bearing element, and a method for making a bearing material as defined in the appended independent claims, to which reference should now be made. Some preferred or advantageous features of the invention are set out in dependent subclaims.

In a first aspect, there is provided a bearing material comprising a polyamide-imide (PAI) plastics polymer material functionalised with hydrocarbon groups, which do not contain silicon.

The hydrocarbon groups may be the residues, or the resulting functional groups, obtained from a reaction between a hydrocarbon-containing reactant, such as a hydrocarbon group with suitable reactive functionality, and the PAI material.

The polyamide-imide polymer may comprise a chain or network of alternating amine and anhydride elements such as acid anhydride elements. The amine elements of the polymer chain are derived from monomers in the form of one or more diamine(s), while the imide elements, or groups, originate from reaction of the anhydride elements with the diamines.

The PAI polymer chains in the bearing material are functionalised with hydrocarbon groups, which may advantageously consist of organic elements only. That is, the PAI material may advantageously be functionalised with hydrocarbon groups which consist of carbon, hydrogen, and one or more element selected from the list of: oxygen, nitrogen, sulfur, phosphorus, fluorine, chlorine, bromine, and iodine.

In a preferred embodiment, the hydrocarbon groups may consist of hydrogen and carbon only, or they may additionally comprise nitrogen and/or oxygen.

The hydrocarbon groups may consist of hydrocarbyl groups, which are structurally equivalent to hydrocarbons from which one hydrogen atom has been removed. Hydrocarbyl groups may alternatively be termed hydrocarbyl chains, hydrocarbyl functional groups, or hydrocarbon functional groups. Alternatively, the hydrocarbon groups may be hydrocarbon chains to which are attached one or more reactive functional groups from the following list: carboxylic acid functional groups, amine functional groups, epoxide functional groups, alcohols, ethers, aldehydes, ketones, amides, esters, and acid halide functional groups. The hydrocarbon groups may be formed from a hydrocarbon chain attached to one or more organic functional groups.

The hydrocarbon groups may be the residues formed by a reaction of the PAI material with a hydrocarbon-containing reactant selected from one or more of: a fatty acid, a fatty amine, and an epoxide. For example, the hydrocarbon group attached to a PAI molecule may be a hydrocarbon chain, or a hydrocarbyl chain, linked to the PAI molecule via a carbonyl group, an amine group, an imide group, an amine group, an ester group, or an ether group.

The hydrocarbon groups with which the PAI material is functionalised do not contain silicon.

The hydrocarbon groups are covalently bonded to the PAI polymer material itself, at one or more positions along the length of the polymer chain.

The inventors' experiments have demonstrated that this hydrocarbon-modified PAI material may advantageously provide a bearing material that demonstrates increased oleophilicity (affinity to oil) compared to conventional PAI materials. That is, the hydrocarbon-modified PAI material may exhibit improved wettability with hydrocarbon oils typically used to lubricate vehicle bearings. Thus, the modified PAI may advantageously better retain engine oil on the bearing surface than a conventional PAl bearing material, leading to increased bearing lubricity and improved bearing-material wear characteristics particularly in stop-start applications.

The low friction characteristics, or lubricity, of the lubricated PAI bearing surface is particularly important for the lifetime of the bearing. The inventors' experiments, in which a steel journal was rotated within cylindrical test bearings coated with different bearing materials, have shown that bearing materials embodying the present invention may advantageously demonstrate improved frictional characteristics over conventional PAl bearing materials. In such tests, the inventors compared conventional PAl bearings containing conventional filler materials in a PAI matrix, with bearings embodying the invention in which the same filler materials were incorporated into a hydrocarbon-modified PAl matrix.

The inventors have found that hydrocarbon-modification of the PAI bearing material may lead to advantageously improved wettability of oil on PAI-coated bearing surfaces, with the potential effect that more oil is retained on the bearing both during running and between running operations when the bearing is stationary.

The material of the present invention may advantageously exhibit both low friction and quicker establishment of hydrodynamic lubrication at lower speeds after start up.

Thus, the modified-PAI bearing material of the present invention exhibits advantageously improved oil wettability, and highly desirable low friction characteristics.

The hydrocarbon groups may contain saturated or unsaturated hydrocarbyl chains. That is, the hydrocarbon groups may contain alkyl groups containing only single carbon-carbon bonds, alkenyl groups containing one or more double bonds between carbon atoms, or alkynyl groups containing one or more triple bonds between carbon atoms.

Preferably, the hydrocarbon groups may comprise, or consist of, aliphatic chains. Preferably more than 70%, or 80%, or 90% of the hydrocarbon groups in a hydrocarbon-modified PAI material are aliphatic hydrocarbon groups.

The hydrocarbon groups may include branched hydrocarbon groups and/or unbranched hydrocarbons. In a preferred embodiment, more than 70%, or 80%, or 90% of the hydrocarbon groups are unbranched hydrocarbon groups.

Preferably the average chain length of the hydrocarbon groups is at least 6, or 8, or 12 carbon atoms, and/or less than 21, or 18, or 14 carbon atoms. The average chain length of the hydrocarbon groups may be between 6 and 21, or between 8 and 18, or between 12 and 14 carbon atoms. It is thought that functional groups with a chain length of more than 21 carbon atoms may cause steric hindrance around polymer chains, and may thus be detrimental to polymer cure. Hydrocarbon groups with average chain lengths of between 8 and 14 carbon atoms may advantageously increase the oleophilicity of the polymer material, without being overly detrimental to polymer cure and the strength achieved during the curing process.

References to "average chain length" herein preferably conform to standard IUPAC nomenclature. Thus, the "average chain length" in this context refers to the average length of the hydrocarbon groups' parent chains. The "average chain length" does not take into account any carbon atoms forming substituent "branch" portions of a branched hydrocarbon group.

In a preferred embodiment, the polymer may be functionalised with octyl functional groups, i.e. hydrocarbyl groups with a chain length of eight carbon atoms. In another preferred embodiment, the polymer may be functionalised with dodecyl functional groups, i.e. hydrocarbyl groups with a chain length of twelve carbon atoms.

The PAI polymer material is made up of so-called "repeat units", which are joined to one another at either end to form polymer chains. The average number of repeat units in each polymer chain may be calculated by analysing the molecular weight of the polymer material. The degree to which the polymer material is functionalised may be quantified by the proportion of repeat units that are functionalised with a hydrocarbon group, or, where a repeat unit has more than one potentially functionalisable site, the proportion of such sites that are functionalised with a hydrocarbon group. This proportion may be expressed as a molar ratio of hydrocarbon groups to repeat units in a polymer molecule, or functionalisable sites on a polymer molecule.

Preferably the molar ratio is between 0.2 and 0.02, and preferably between 0.1 and 0.05. In other words, the hydrocarbon groups are preferably present in a quantity of between 20 mol% (ratio of 0.2) and 2 mol% (ratio of 0.02) with respect to the number of repeat units or potentially functionalisable sites in the molecules of the PAI polymer material.

According to this definition, a theoretical ratio of 1:1 could correspond to one hydrocarbon group bonded to each repeat unit of each PAI polymer chain. Thus, for example, a ratio of 0.2 would correspond to one in every five repeat units being functionalised with one hydrocarbon group. In a polymer material with a ratio of 0.1 hydrocarbon groups to 1 repeat unit of the polymer, 10 % of the repeat units in the polymer are then functionalised with a hydrocarbon group.

On average, each repeat unit of a non-modified PAI polymer chain may be considered to have one or more functionalisable reaction sites which are functionalisable by a hydrocarbon with reactive functionality.

In a preferred embodiment of the bearing material, the molar ratio of hydrocarbon groups to the functionalisable reaction sites in the polymer material is between 0.2 and 0.02, and preferably between 0.1 and 0.05. In other words, the hydrocarbon groups are preferably present in a quantity of between 20 mol% (ratio of 0.2) and 2 mol% (ratio of 0.02) with respect to the total number of functionalisable reaction sites (both functionalised and unfunctionalised) in the PAI polymer material.

As the average length and composition of the polymer chains can be calculated, it is possible to calculate the number of sites on each polymer chain that are potentially functionalisable with a hydrocarbon group. The number of functionalisable sites will depend both on the polymer itself and the composition of the precursor hydrocarbon with reactive functionality. For example, where the hydrocarbon with reactive functionality is a a fatty amine, it is expected that fatty amines will only functionalise acid or carbonyl groups on the polymer chain itself. Thus, the average number of acid and/or carbonyl groups on each polymer chain may be calculated to be the number of potential reaction sites that are functionalisable with a fatty amine precursor. Likewise, where the hydrocarbon with reactive functionality is a fatty acid, fatty acids are expected to only functionalise amine groups on the polymer chain itself. The total number of amine groups on each polymer chain therefore gives the number of potential reaction sites that are functionalisable with a fatty acid. Hydrocarbons with epoxide functional groups may also functionalise acid or amine functional groups on the polymer itself.

The number of hydrocarbon groups, and the number of functionalisable reaction sites, on a polymer molecule may be converted into a ratio to give an indication of the proportion to which the polymer material is functionalised.

If the molar ratio of hydrocarbon groups to the functionalisable reaction sites in the polymer material is 0.2, this is equivalent to 20 % of the functionalisable reaction sites on the polymer chains being functionalised with a hydrocarbon group. If the molar ratio of hydrocarbon groups to the functionalisable reaction sites in the polymer material is 0.05, this is equivalent to 5 % of the functionalisable reactive sites on the polymer chains being functionalised with a hydrocarbon with reactive functionality, and so on.

Particularly preferably, the hydrocarbon groups are present in a quantity of between 10 mol% (ratio of 0.1) and 5 mol% (ratio of 0.05) with respect to the functionalisable reaction sites in the PAI polymer material. The molar ratio of hydrocarbon groups to the functionalisable reaction sites in the polymer material may be at least 0.2, or at least 0.5, and/or less than 0.1, or 0.20, or 0.30.

In a second aspect of the invention, a bearing material embodying the invention may be incorporated into a bearing or bearing element. This aspect of the invention thus provides a bearing element in which a bearing-surface layer comprises a bearing material embodying the invention. Preferably, the bearing-surface layer may also comprise other materials, such as fillers within a matrix of the bearing material.

Advantageously, any such materials, including fillers, used in prior-art PAI bearing materials to enhance bearing properties such as conformability, embedability, wear resistance, bearing-material strength and low friction may be used in the same way in bearing materials embodying the present invention.

In a third aspect, the invention may advantageously provide a method for making a bearing material comprising the steps of preparing a polyamide-imide (PAI) polymer material, and, when the resulting polymer material reaches a predetermined molecular weight, adding a hydrocarbon-containing reactant to the reaction mixture to form a bearing material comprising a polyamide-imide plastics polymer material functionalised with hydrocarbon groups, which do not contain silicon.

The step of preparing a polyamide-imide polymer material may comprise the step of copolymerising an anhydride monomer and a diamine monomer. This step may consist of preparing a PAI polymer according to a conventional process for forming PAI polymer material.

The hydrocarbon-containing reactant, or precursor, is a hydrocarbon with suitable reactive functionality for reaction with PAI polymer material.

The hydrocarbon-containing reactant may be added to the reaction mixture when the polymer has reached a desired or predetermined molecular weight, so that the hydrocarbon-containing reactant reacts to deposit hydrocarbon groups on one or more of the reactive, or functional, sites on the polymer chains.

Thus the hydrocarbon groups bonded to the PAI material may be the residues, or the resulting functional groups, obtained from the reaction between the hydrocarbon-containing reactant, or hydrocarbon with reactive functionality, and the PAI material.

The hydrocarbon-containing reactant may be any reactant which contains a portion that is a hydrocarbon group with reactive functionality, as defined above. The hydrocarbon-containing reactant may be any reactant which will react to deposit a hydrocarbon group, as defined above, onto a PAI polymer molecule. For example, the hydrocarbon-containing reactant may be: a carboxylic acid, which contains a hydrocarbon chain attached to a - COOH (carboxyl) functional group; an amine molecule, which contains a hydrocarbon chain attached to an -NH₂ (amine) functional group; or an epoxy reactant, which contains a hydrocarbon chain attached to an epoxide functional group.

The hydrocarbon-containing reactant may be a fatty acid, that is, a carboxylic acid containing a hydrocarbon chain attached to a -COOH (carboxyl) functional group. On addition to the reaction mixture, the fatty acid may react with the polymer material by condensation reaction, leaving a hydrocarbon chain, attached to oxygen and/or nitrogen functional groups, covalently bonded to the polymer chain.

The hydrocarbon-containing reactant may be a fatty amine, that is, an amine containing a hydrocarbon chain attached to an -NH₂ (amine) functional group. On addition to the reaction mixture, the fatty amine may react with the polymer material by condensation reaction, leaving a hydrocarbon chain, attached to oxygen and/or nitrogen functional groups, covalently bonded to the polymer chain.

The hydrocarbon-containing reactant may be a hydrocarbon with one or more epoxide functional groups attached to the hydrocarbon chain. For example, a suitable hydrocarbon-containing reactant may be a hydrocarbyl glycidyl ether, such as octyl glycidyl ether or decyl glycidyl ether. On addition to the reaction mixture, the hydrocarbon-containing reactant may react with an acid group, or an amine group, on the polymer material by a ring-opening reaction occuring at the epoxide ring. This may leave a hydrocarbon chain, attached to oxygen and/or nitrogen functional groups, covalently bonded to the polymer chain.

Preferably the average chain length of the hydrocarbon-containing reactant is between 6 and 21, or between 8 and 18, or between 12 and 14 carbon atoms.

The hydrocarbon-containing reactant may be chosen in order to result in functionalisation with hydrocarbon functional groups of a desired chain length, and with desired properties. That is, the hydrocarbon-containing reactant may contain saturated or unsaturated hydrocarbon chains, so as to form saturated or unsaturated hydrocarbon groups with reactive functionality. Likewise, the hydrocarbon-containing reactant may contain alkyl groups containing only single carbon-carbon bonds, alkenyl groups containing one or more double bonds between carbon atoms, or alkynyl groups containing one or more triple bonds between carbon atoms.

Preferably, the hydrocarbon-containing reactant may contain aliphatic hydrocarbon chains, particularly preferably the hydrocarbon groups may be unbranched hydrocarbon groups. Preferably the hydrocarbon-containing reactant is added to the reaction mixture in a quantity such that the molar ratio of the hydrocarbon-containing reactant to the repeat units in the polymer chains of the polymer material is between 0.2 and 0.02, and preferably between 0.1 and 0.05. The hydrocarbon-containing reactant is added when the polymer has reached a desired molecular weight, that is, the polymer molecules contain a desired number of repeat units, so that the hydrocarbon-containing reactant and the repeat units in the PAI polymer molecules are present in this ratio.

In a preferred embodiment, the hydrocarbon-containing reactant is added to the reaction mixture in a quantity such that the molar ratio of the hydrocarbon-containing reactant to functionalisable reaction sites in the polymer material is between 0.2 and 0.02, and preferably between 0.1 and 0.05. The hydrocarbon-containing reactant is added when the polymer has reached a desired molecular weight, so that the hydrocarbon-containing reactant and the functionalisable reaction sites on the PAI polymer molecules are present in this ratio.

The molar ratio of the hydrocarbon-containing reactant to repeat units in the polymer molecules, or functionalisable reaction sites in the polymer material, may be calculated as described above in relation to the first aspect of the invention, and may advantageously determine the average number of hydrocarbon groups bonded to each polymer chain. As the molar ratio of hydrocarbon-containing reactant to functionalisable reaction sites in the polymer material increases, the number of hydrocarbon groups per polymer molecule will on average increase. The higher the ratio, the greater the proportion of functionalisable sites, or reaction sites, on the PAI chains become occupied by hydrocarbon groups. As this leaves fewer functional sites available for cross-linking with other polymer chains, however, a higher molar ratio of the hydrocarbon-containing reactant to potential reaction sites in the polymer material may disadvantageously reduce the extent to which cross-linking bonds are formed during the polymer curing process.

In a fourth aspect, the invention may advantageously provide another method for making a bearing material comprising the steps of mixing a polyamide-imide plastics polymer with a catalyst, and adding a hydrocarbon-containing reactant to the reaction mixture to form a bearing material comprising a polyamide-imide plastics polymer material functionalised with hydrocarbon groups with reactive functionality.

The polyamide-imide plastics polymer may be heated with the catalyst prior to addition of the hydrocarbon-containing reactant.

Preferably the hydrocarbon-containing reactant may be progressively added to the reaction mixture.

The hydrocarbon-containing reactant, including preferred chain lengths and molar ratios, are preferably as described above in relation to the first and/or third aspects of the invention.

### Specific Embodiments and Best Mode of Invention

Specific embodiments of the invention will now be described by way of example, with reference to the accompanying drawing, in which;

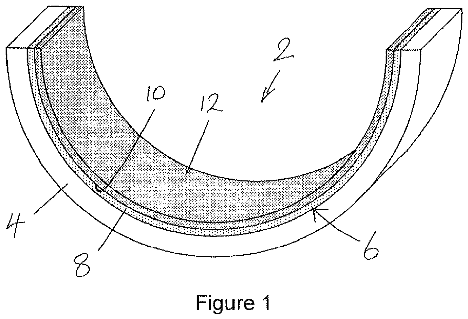

Figure 1 is a schematic diagram of a half-shell of a plain bearing.

Figure 1 shows a half shell 2 of a cylindrical sliding bearing comprising a strong backing 4 of steel, a bearing lining layer 6, comprising a layer 8 of a copper-based alloy or an aluminium-based alloy bonded to the backing and a nickel diffusion barrier, or interlayer, 10, and a plastics, polymer-based overlay layer 12 embodying the present invention bonded to the lining layer. In other embodiments of the invention the overlay may be bonded directly to the backing, and the lining layer omitted, depending on the compatibility of the materials used and the intended use of the bearing.

The overlay layer, or sliding layer, comprises a modified PAI resin matrix embodying the invention and fabricated as described below. The PAI matrix may incorporate filler materials as follows.

As in prior-art polymer bearings, the sliding layer material may optionally include or incorporate at least one solid lubricant. Suitable solid lubricants include: metal sulphides with layered structures; graphite; hexagonal boron nitride (h-BN); molybdenum disulfide (MoS₂); tungsten disulphide (WS₂) or PTFE. One or more of these materials may be used in a sliding layer. Other suitable materials are envisaged and will be readily apparent to the skilled person.

As in prior-art polymer bearings, the sliding layer material may also include harder particles in powdered and/or flaked form. This may provide improved wear resistance. The harder particles may include, in any suitable combination, one or more different types of hard particle. Some suitable hard particles include nitrides, carbides, borides, oxides, and metal powders. Other suitable materials are envisaged and will be readily apparent to the skilled person.

The total thickness of the sliding layer material is between about 3µm, or 6µm, and about 14µm. A preferred thickness of the sliding layer material for bearing elements embodying the present invention is between about 8µm and about 12µm, or particularly preferably in the range 9µm to 11µm.

A conventional PAI polymer for a bearing material is formed by the copolymerisation of polyamide imide monomers such as trimellitic anhydride and methylene diamine. These monomers are mixed in known manner, in combination with suitable solvents and catalytic materials, to allow the monomers to copolymerise. An initial polymerisation step produces a polymer which may be applied to the surface of a bearing element, for example by spraying, and cured to form a thermoset PAI bearing layer. This process is described in the prior art, such as in patent publications WO 2004/113749 and GB 2521004A.

### Complete Synthesis Method

In a preferred embodiment of the present invention, this prior art process is modified by performing the copolymerisation route as usual and, at a time when the PAI polymer chains in the reaction mixture have reached a predetermined average molecular weight, adding under nitrogen a hydrocarbon-containing reactant containing hydrocarbon functional groups. The hydrocarbon-containing reactant will react with the polymer chains so that hydrocarbon groups with reactive functionality bond to the polymer chains at a proportion of available reaction sites. The quantities of reactant are controlled so that the addition of the hydrocarbon-containing reactant functionalises the polymer chains at a desired proportion of the potential reaction sites on the polymer chains.

The resulting polymer may be applied to the surface of a bearing element, for example by spraying, and cured to form a thermoset PAl bearing layer, as is known in the art.

### Synthesis by Functionalisation of PAI

In another preferred embodiment of the present invention, the prior art copolymerisation process is performed as usual to produce conventional PAI polymer. The conventional PAI is heated under nitrogen together with a solvent and a catalyst, so that the PAI is dissolved in the solvent. A hydrocarbyl-containing reactant is then added dropwise to the reaction mixture.

The resulting polymer may be applied to the surface of a bearing element, for example by spraying, and cured to form a thermoset PAl bearing layer, as is known in the art.

### Examples: Functionalisation of PAI

In a preferred example, PAI modified with various proportions (mol%) of hydrocarbon functional groups were prepared by the "Synthesis by Functionalisation of PAl" synthesis route set out above.

The quantites and molar ratios of the synthesis constituents are set out below.

**Example 1: 5 mol% Dodecylamine**

| | Mr (g/mol) | Molar ratios |
|---|---|---|
| PAI | 372.37 | 1 |
| Dodecylamine | 185.35 | 0.05 |

**Example 2: 10 mol% Dodecylamine**

| | Mr (g/mol) | Molar ratios |
|---|---|---|
| PAI | 372.37 | 1 |
| Dodecylamine | 185.35 | 0.10 |

**Example 3: 20 mol% Dodecylamine**

| | Mr (g/mol) | Molar ratios |
|---|---|---|
| PAI | 372.37 | 1 |
| Dodecylamine | 185.35 | 0.20 |

**Example 4: 5 mol% Octylamine**

| | Mr (g/mol) | Molar ratios |
|---|---|---|
| PAI | 372.37 | 1 |
| Octylamine | 129.24 | 0.05 |

**Example 5: 10 mol% Octylamine**

| | Mr (g/mol) | Molar ratios |
|---|---|---|
| PAI | 372.37 | 1 |
| Octylamine | 129.24 | 0.10 |

**Example 6: 20 mol% Octylamine**

| | Mr (g/mol) | Molar ratios |
|---|---|---|
| PAI | 372.37 | 1 |
| Octylamine | 129.24 | 0.20 |

The hydrocarbyl-containing reactants are believed to react with the PAI polymer molecules so that the resulting polymer chains are functionalised with the entire hydrocarbyl-portion of the reactant molecule. Thus, when octylamine was used as the hydrocarbon-containing reactant, it is believed that, on average, the PAI chains become functionalised with octylfunctional groups with a length of eight carbon atoms. Likewise, when dodecylamine was used as the hydrocarbon-containing reactant, it is believed that, on average, the PAI chains become functionalised with dodecyl- functional groups with a length of twelve carbon atoms.

Samples of the resulting modified polymers were analysed using nuclear magnetic resonance spectroscopy (NMR) to confirm functionalisation, and by gel permeation chromatography (GPC) to confirm molecular weight increase compared to unfunctionalised PAI

NMR and GPC measurements confirmed that functionalisation of the PAI material had been successfully achieved.

Contact angle analysis confirmed that oil wettability (oleophilicity) increased with an increasing degree of functionality. Contact angle measurements conducted with motor oil on 5 mol% and 10 mol% dodecyl- functionalised PAI are set out in Table 1, below.

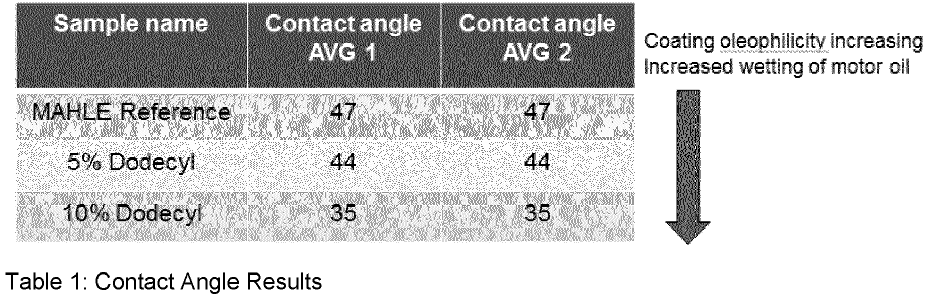

Wear testing showed that 5 mol% dodecyl-functionalised PAI exhibited similar wear behaviour (measured by volume loss in mm³) to conventional PAl. The 10 mol% dodecyl-functionalised PAI exhibited slightly higher volume loss than the 5 mol% sample, but samples of PAI functionalised with both 5 mol% and 10 mol% dodecyl- functional groups exhibited suitable low wear behaviour.

Stribeck curves, plotting friction coefficient against sliding speed, for several samples of each type of bearing material were then prepared. In each case, the lubricated sliding of a steel journal against each bearing material was tested, and particular attention was paid to the running in phase of sliding and the steady state phase, which was reached after about 250 sliding cycles (rotations). Stribeck Curve testing of the samples showed a positive trend towards lower coefficients of friction as the proportion of functionalisation was increased. In particular for the 10% dodecyl- functional material lower coefficients of friction were observed at lower speeds at fewer cycles than the standard PAl polymer. This suggests that functionalisation improves the sliding surface and helps to achieve hydrodynamic lubrication at lower speeds than typically observed for conventional PAI polymer coatings. This suggests that the hydrocarbon-functionalised materials will perform better at start up, as lower frictions may be achieved much more quickly and steady state conditions may be reached quickly and possess lower frictions which will extend the bearing life.

## Claims

1. A bearing material comprising a polyamide-imide plastics polymer material functionalised with hydrocarbon groups, which do not contain silicon.

2. The bearing material according to claim 1, in which more than 90% of the hydrocarbon groups are aliphatic hydrocarbon groups.

3. The bearing material according to claim 1 or 2, in which more than 90% of the hydrocarbon groups are unbranched hydrocarbon groups.

4. The bearing material according to claim 1, 2 or 3, in which the average chain length of the hydrocarbon groups is between 6 and 21, or between 8 and 18, or between 12 and 14 carbon atoms.

5. The bearing material according to any one of the preceding claims, in which the molar ratio of hydrocarbon groups with reactive functionality to the repeat units in each molecule of the polymer material is between 0.2 and 0.02, and preferably between 0.1 and 0.05.

6. A bearing element in which a bearing-surface layer comprises a bearing material as defined in any one of the preceding claims.

7. The bearing element according to claim 6, in which the bearing-surface layer comprises particles of one or more other materials within a matrix of the bearing material.

8. A method for making a bearing material comprising the steps of:
preparing a polyamide-imide polymer material; and when the resulting polymer material reaches a predetermined molecular weight, adding a hydrocarbon-containing reactant to the reaction mixture to form a bearing material comprising a polyamide-imide plastics polymer material functionalised with hydrocarbon groups, which do not contain silicon.

9. The method according to claim 8, in which the hydrocarbon-containing reactant is a fatty acid or a fatty amine.

10. The method according to claim 8, in which the hydrocarbon-containing reactant contains an epoxide functional group.

11. The method according to any one of claims 8 to 10, in which the average chain length of the hydrocarbon-containing reactant is between 6 and 21, or between 8 and 18, or between 12 and 14 carbon atoms.

12. The method according to any one of claims 8 to 11, in which the hydrocarbon-containing reactant is added in a quantity such that the molar ratio of the hydrocarbon-containing reactant to repeat units in each molecule of the polymer material is between 0.2 and 0.02, and preferably between 0.1 and 0.05.

13. A method for making a bearing material comprising the steps of:
mixing a polyamide-imide plastics polymer with a catalyst; and adding a hydrocarbon-containing reactant to the reaction mixture to form a bearing material comprising a polyamide-imide plastics polymer material functionalised with hydrocarbon groups, which do not contain silicon.

14. The method according to claim 13, in which the average chain length of the hydrocarbon-containing reactant is between 6 and 21, or between 8 and 18, or between 12 and 14 carbon atoms.

15. The method according to claim 13 or 14, in which the hydrocarbon-containing reactant is added in a quantity such that the molar ratio of the hydrocarbon-containing reactant to repeat units in each molecule of the polymer material is between 0.2 and 0.02, and preferably between 0.1 and 0.05.

## Patentansprüche

1. Lagermaterial, umfassend ein Polymermaterial aus Polyamid-Imid-Kunststoff, das mit Kohlenwasserstoffgruppen funktionalisiert ist, die kein Silicium enthalten.

2. Lagermaterial nach Anspruch 1, in dem mehr als 90% der Kohlenwasserstoffgruppen aliphatische Kohlenwasserstoffgruppen sind.

3. Lagermaterial nach Anspruch 1 oder 2, in dem mehr als 90% der Kohlenwasserstoffgruppen unverzweigte Kohlenwasserstoffgruppen sind.

4. Lagermaterial nach Anspruch 1, 2 oder 3, in dem die durchschnittliche Kettenlänge der Kohlenwasserstoffgruppen zwischen 6 und 21 oder zwischen 8 und 18 oder zwischen 12 und 14 Kohlenstoffatome beträgt.

5. Lagermaterial nach einem der vorstehenden Ansprüche, in dem das molare Verhältnis von Kohlenwasserstoffgruppen mit reaktiver Funktionalität zu den Wiederholungseinheiten in jedem Molekül des Polymermaterials zwischen 0,2 und 0,02 und vorzugsweise zwischen 0,1 und 0,05 liegt.

6. Lagerelement, in dem eine Anlageflächenschicht ein Lagermaterial wie in einem der vorstehenden Ansprüche definiert umfasst.

7. Lagerelement nach Anspruch 6, in dem die Anlageflächenschicht Partikel aus einem oder mehreren Materialien innerhalb einer Matrix des Lagermaterials umfasst.

8. Verfahren zum Herstellen eines Lagermaterials, umfassend die Schritte:
Zubereiten eines Polyamid-Imid-Polymermaterials; und wenn das resultierende Polymermaterial ein vorher festgelegtes Molekulargewicht erreicht, Hinzufügen eines kohlenwasserstoffhaltigen Reaktanten zu der Reaktionsmischung, um ein Lagermaterial zu bilden, das ein Polymermaterial aus Polyamid-Imid-Kunststoff umfasst, das mit Kohlenwasserstoffgruppen funktionalisiert ist, die kein Silicium enthalten.

9. Verfahren nach Anspruch 8, in dem der kohlenwasserstoffhaltige Reaktant eine Fettsäure oder ein Fettamin ist.

10. Verfahren nach Anspruch 8, in dem der kohlenwasserstoffhaltige Reaktant eine funktionelle Epoxidgruppe enthält.

11. Verfahren nach einem der Ansprüche 8 bis 10, in dem die durchschnittliche Kettenlänge des kohlenwasserstoffhaltigen Reaktanten zwischen 6 und 21 oder zwischen 8 und 18 oder zwischen 12 und 14 Kohlenstoffatome beträgt.

12. Verfahren nach einem der Ansprüche 8 bis 11, in dem der kohlenwasserstoffhaltige Reaktant in einer Menge derart hinzugefügt wird, dass das molare Verhältnis des kohlenwasserstoffhaltigen Reaktanten zu Wiederholungseinheiten in jedem Molekül des Polymermaterials zwischen 0,2 und 0,02 und vorzugsweise zwischen 0,1 und 0,05 liegt.

13. Verfahren zum Herstellen eines Lagermaterials, umfassend die Schritte:
Mischen eines Polymers aus Polyamid-Imid-Kunststoff mit einem Katalysator; und Hinzufügen eines kohlenwasserstoffhaltigen Reaktanten zu der Reaktionsmischung, um ein Lagermaterial zu bilden, das ein Polymermaterial aus Polyamid-Imid-Kunststoff umfasst, das mit Kohlenwasserstoffgruppen funktionalisiert ist, die kein Silicium enthalten.

14. Verfahren nach Anspruch 13, in dem die durchschnittliche Kettenlänge des kohlenwasserstoffhaltigen Reaktanten zwischen 6 und 21 oder zwischen 8 und 18 oder zwischen 12 und 14 Kohlenstoffatome beträgt.

15. Verfahren nach Anspruch 13 oder 14, in dem der kohlenwasserstoffhaltige Reaktant in einer Menge derart hinzugefügt wird, dass das molare Verhältnis des kohlenwasserstoffhaltigen Reaktanten zu Wiederholungseinheiten in jedem Molekül des Polymermaterials zwischen 0,2 und 0,02 und vorzugsweise zwischen 0,1 und 0,05 liegt.

## Revendications

1. Matériau de palier comprenant un matériau polymère plastique polyamide-imide fonctionnalisé avec des groupes hydrocarbonés, qui ne contiennent pas de silicium.

2. Matériau de palier selon la revendication 1, dans lequel plus de 90% des groupes hydrocarbonés sont des groupes hydrocarbonés aliphatiques.

3. Matériau de palier selon la revendication 1 ou 2, dans lequel plus de 90% des groupes hydrocarbonés sont des groupes hydrocarbonés non ramifiés.

4. Matériau de palier selon la revendication 1, 2 ou 3, dans lequel la longueur de chaîne moyenne des groupes hydrocarbonés est entre 6 et 21, ou entre 8 et 18, ou entre 12 et 14 atomes de carbone.

5. Matériau de palier selon l'une quelconque des revendications précédentes, dans lequel le rapport molaire des groupes hydrocarbonés avec fonctionnalité réactive aux unités répétitives dans chaque molécule du matériau polymère est entre 0,2 et 0,02, et de préférence entre 0,1 et 0,05.

6. Élément de palier dans lequel une couche de surface de palier comprend un matériau de palier tel que défini dans l'une quelconque des revendications précédentes.

7. Élément de palier selon la revendication 6, dans lequel la couche de surface de palier comprend des particules d'un ou plusieurs autres matériaux au sein d'une matrice du matériau de palier.

8. Procédé de fabrication d'un matériau de palier comprenant l'étape consistant à :
préparer un matériau polymère polyamide-imide ; et lorsque le matériau polymère résultant atteint un poids moléculaire prédéterminé, ajouter un réactif contenant des hydrocarbures au mélange réactionnel pour former un matériau de palier comprenant un matériau polymère plastique polyamide-imide fonctionnalisé avec des groupes hydrocarbonés, qui ne contiennent pas de silicium.

9. Procédé selon la revendication 8, dans lequel le réactif contenant des hydrocarbures est un acide gras ou une amine grasse.

10. Procédé selon la revendication 8, dans lequel le réactif contenant des hydrocarbures contient un groupe fonctionnel époxyde.

11. Procédé selon l'une quelconque des revendications 8 à 10, dans lequel la longueur de chaîne moyenne du réactif contenant des hydrocarbures est entre 6 et 21, ou entre 8 et 18, ou entre 12 et 14 atomes de carbone.

12. Procédé selon l'une quelconque des revendications 8 à 11, dans lequel le réactif contenant des hydrocarbures est ajouté en une quantité telle que le rapport molaire du réactif contenant des hydrocarbures aux unités répétitives dans chaque molécule du matériau polymère est entre 0,2 et 0,02, et de préférence entre 0,1 et 0,05.

13. Procédé de fabrication d'un matériau de palier comprenant l'étape consistant à :
mélanger un polymère plastique polyamide-imide avec un catalyseur ; et ajouter un réactif contenant des hydrocarbures au mélange réactionnel pour former un matériau de palier comprenant un matériau polymère plastique polyamide-imide fonctionnalisé avec des groupes hydrocarbonés, qui ne contiennent pas de silicium.

14. Procédé selon la revendication 13, dans lequel la longueur de chaîne moyenne du réactif contenant des hydrocarbures est entre 6 et 21, ou entre 8 et 18, ou entre 12 et 14 atomes de carbone.

15. Procédé selon la revendication 13 ou 14, dans lequel le réactif contenant des hydrocarbures est ajouté en une quantité telle que le rapport molaire du réactif contenant des hydrocarbures aux unités répétitives dans chaque molécule du matériau polymère est entre 0,2 et 0,02, et de préférence entre 0,1 et 0,05.
